# EUROPEAN PATENT APPLICATION

(11) **EP 4 071 920 A1**
(43) Date of publication of application: **12.10.2022**
(21) Application number: 20897103.6
(22) Date of filing: 01.12.2020
(51) Int. Cl.: H01M 50/543, H01M 10/04, H01M 10/058, H01M 50/10, H01M 50/147, H01M 50/183, H01M 50/342, H01M 50/528

(54) **SECONDARY BATTERY**

(30) Priority: 04.12.2019 JP 2019219432
(71) Applicant: Murata Manufacturing Co., Ltd., Nagaokakyo-shi, Kyoto 617-8555 (JP)
(72) Inventor: EGUCHI, Kenta, Nagaokakyo-shi, Kyoto 617-8555 (JP); OTSUKA, Masahiro, Nagaokakyo-shi, Kyoto 617-8555 (JP)
(74) Representative: Witte, Weller & Partner Patentanwälte mbB
(86) International application number: PCT/JP2020/044684
(87) International publication number: WO 2021/112084

(57) **Abstract**

Provided is a secondary battery including an electrode assembly and an exterior body that houses the electrode assembly. The exterior body of the secondary battery includes a metal plate joined with an insulating material interposed therebetween, and the metal plate serves as an external output terminal.

## Description

### TECHNICAL FIELD

The present invention relates to a secondary battery. In particular, the present invention relates to a secondary battery including an electrode assembly composed of an electrode-constituting layer containing a positive electrode, a negative electrode, and a separator.

### BACKGROUND ART

The secondary battery can be repeatedly charged and discharged because of a so-called storage battery, and is used for various applications. For example, secondary batteries are used in mobile equipment such as mobile phones, smartphones, and laptop computers.

In view of various battery applications including mobile equipment and the like, the secondary battery includes an output terminal, and is used by being connected to external equipment.

### PRIOR ART DOCUMENT

### PATENT DOCUMENT

Patent Document 1: Japanese Patent Application Laid-Open No. 2015-536036

### SUMMARY OF THE INVENTION

### Problem to be solved by the invention

The inventor of the present application has noticed that there is a problem to be overcome in the conventional secondary battery, and has found a need to take measures therefor. Specifically, the inventor of the present application has found that there is the following problem.

The secondary battery includes an electrode assembly in which electrode-constituting layers containing a positive electrode, a negative electrode, and a separator therebetween are stacked, and an exterior body enclosing the electrode assembly. The exterior body is provided with an output terminal to be connected to external equipment, that is, an external output terminal.

The external output terminal often has a rivet type configuration, and is provided by crimping a metal rivet member. Due to "crimping", the metal rivet portion is deformed, and the insulating portion is pressed to achieve sealing.

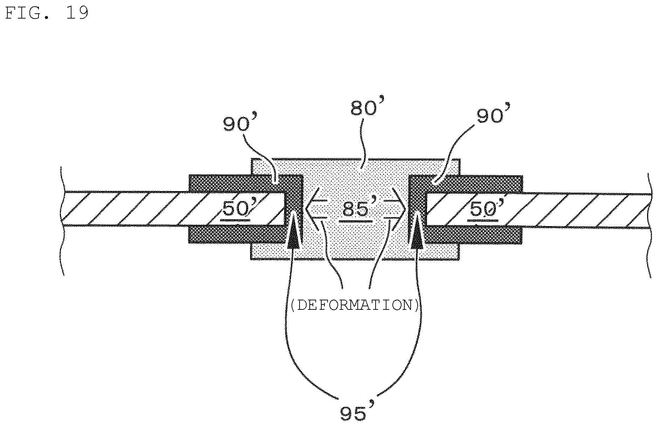

Specifically, in the rivet type external output terminal as shown in FIG. 19, "crimping" causes the metal rivet member 80' to deform such that the body part 85' becomes thick, and the insulating portion 90' located between the body part 85' of the metal rivet member 80' and the exterior body 50' is compressed through such deformation. In particular, the region 95' of the insulating portion 90' existing in the vicinity of the edge of the exterior body 50' is greatly compressed. Thus, when the compressive force due to the "crimping" becomes excessive, the region 95' of the insulating portion 90' may become extremely thin or cut, and there is a concern that a desired sealing force will not be provided. That is, in such a case, the terminal becomes an undesired terminal as an external output terminal of the secondary battery.

The present invention has been made in view of such problem. That is, it is a main object of the present invention to provide a secondary battery including a more suitable external output terminal.

### Means for solving the problem

The inventor of the present application has attempted to solve the above problem by approaching from a new direction instead of an extension of the prior art. As a result, the present inventor has invented a secondary battery in which the above main object has been achieved.

The present invention provides a secondary battery including an electrode assembly and an exterior body that houses the electrode assembly, wherein the exterior body includes a metal plate joined with an insulating material interposed therebetween, and the metal plate serves as an external output terminal.

### Advantageous effect of the invention

The secondary battery of the present invention includes a more suitable external output terminal.

Specifically, in the present invention, the external output terminal is formed by attaching the metal plate to the exterior body with the insulating material interposed therebetween, and "crimping" is not performed. That is, when the metal plate is attached to the exterior body, a force large enough to deform the metal plate is not applied to the metal plate. Thus, in the external output terminal according to the present invention, the possibility that the insulating material is extremely thinned or cut is reduced while the insulating material provides a desired sealing force. As a result, a more preferred secondary battery is provided.

### BRIEF EXPLANATION OF DRAWINGS

FIG. 1 is a sectional view schematically showing a configuration of an electrode assembly (FIG. 1(A): non-wound planar stack type, FIG. 1(B): wound type).
FIG. 2 is a schematic sectional view showing a configuration of an external output terminal of a secondary battery according to an embodiment of the present invention (FIG. 2(A): outer arrangement of metal plate, FIG. 2(B): inner arrangement of metal plate).
FIG. 3 is a schematic sectional view of a secondary battery according to an embodiment for describing a configuration of an exterior body (FIG. 3(A): outer arrangement of metal plate, FIG. 3(B): inner arrangement of metal plate).
FIG. 4 is a schematic sectional view of a secondary battery according to an embodiment for describing a configuration of an exterior body.
FIG. 5 is a schematic sectional view of a secondary battery according to an embodiment of the present invention (FIG. 5(A): a wound type electrode assembly/installation of an external output terminal on a cup-shaped member of an exterior body, and FIG. 5(B): a wound type electrode assembly/installation of an external output terminal on a lid-shaped member of an exterior body).
FIG. 6 is a schematic sectional view for describing a mode of an external output terminal positioned on an inner side of an exterior body.
FIG. 7 is a schematic sectional view for describing a modified mode of the external output terminal positioned on an inner side of the exterior body.
FIG. 8 is a schematic sectional view for describing a mode of an external output terminal positioned on an outer side of an exterior body.
FIG. 9 is a schematic sectional view for describing a modified mode of the external output terminal positioned on an outer side of the exterior body.
FIG. 10 is a schematic sectional view for describing a vent function of an external output terminal.
FIG. 11 is a schematic sectional view for describing a "thin mode of an exterior body".
FIG. 12 is a schematic sectional view for describing a "mode of a unique insulating material configuration".
FIG. 13 is a schematic sectional view for describing" a unique thickness mode of an insulating material".
FIGS. 14(A) to (C) are schematic sectional views for describing arrangement variations of the external output terminal.
FIGS. 15(a) to (d) are schematic perspective views for illustrating various forms of secondary batteries, such as a button-type or a coin-type, and a square type.
FIGS. 16(a) to (d) are schematic perspective views for illustrating various shapes (a circle and a quadrangle or a rectangle) of the metal plate of the external output terminal.
FIG. 17 is a schematic sectional view for describing that a resin layer for insulation is additionally provided.
FIG. 18 is a schematic sectional view for describing a modified mode of the present invention.
FIG. 19 is a schematic sectional view showing a configuration of a conventional rivet type output terminal (prior art).

### MODE FOR CARRYING OUT THE INVENTION

Hereinafter, a secondary battery according to an embodiment of the present invention will be described in more detail. Although the description will be made with reference to the drawings as necessary, various elements in the drawings are merely shown schematically and exemplarily for an understanding of the present invention, and appearance and/or dimensional ratios and the like may be different from actual ones.

The "sectional view" described directly or indirectly in the present specification is based on a virtual section obtained by cutting the secondary battery along the stacking direction of the electrode assembly or the electrode-constituting layer constituting the secondary battery. Similarly, the direction of the "thickness" described directly or indirectly in the present specification is based on the stacking direction of the electrode materials constituting the secondary battery. For example, in the case of a "secondary battery having a thickness in a plate shape" such as a button-type or a coin-type, the direction of the "thickness" corresponds to the plate thickness direction of the secondary battery. The term "plan view" used in the present specification is based on a sketch drawing when an object is viewed from above or below in the thickness direction.

In addition, "up-down direction" and "right-left direction" used directly or indirectly in the present specification correspond to the up-down direction and the right-left direction in the drawings, respectively. Unless otherwise specified, the same reference numerals or symbols denote the same members or parts or the same semantic contents. In a preferred mode, it can be understood that the downward direction in the vertical direction (that is, the direction in which gravity acts) corresponds to the "down direction", and the opposite direction corresponds to the "up direction".

The various numerical ranges referred to in the present specification are intended to include the numerical values themselves of the lower limit and the upper limit, unless a particular term such as "less than" or "more than/greater than" is attached thereto. That is, when a numerical range such as 1 to 10 is taken as an example, it can be interpreted as including the lower limit of "1" and also including the upper limit of "10".

### [Basic configuration of secondary battery]

The term "secondary battery" as used in the present specification refers to a battery that can be repeatedly charged and discharged. Thus, the secondary battery according to the present invention is not excessively limited by its name, and for example, a power storage device or the like can also be included in the target.

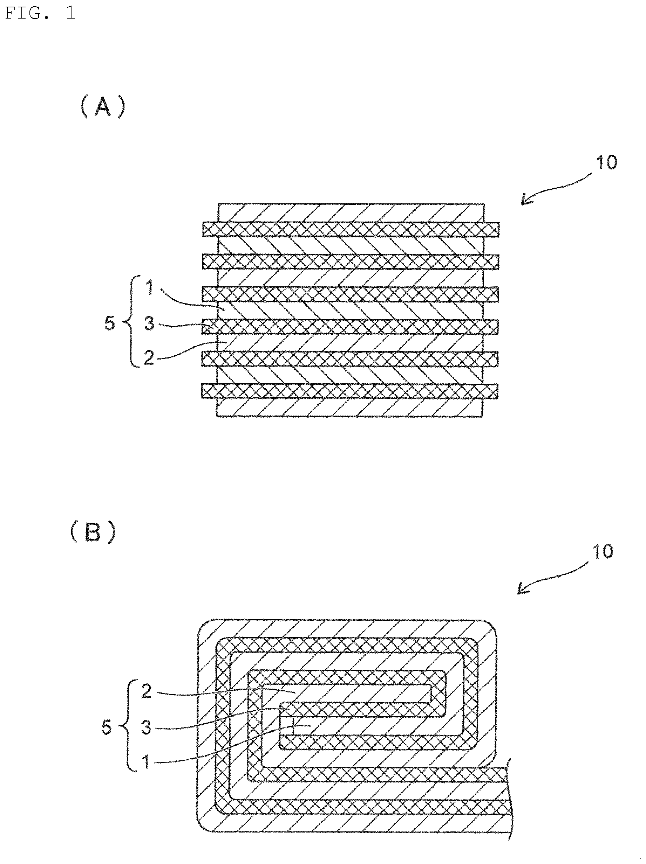

The secondary battery according to the present invention includes an electrode assembly in which electrode-constituting layers containing a positive electrode, a negative electrode, and a separator are stacked. FIG. 1 illustrates an electrode assembly 10. As illustrated, the positive electrode 1 and the negative electrode 2 are stacked with the separator 3 interposed therebetween to form an electrode-constituting layer 5, and at least one or more of the electrode-constituting layers 5 are stacked to form an electrode assembly 10. In the secondary battery, such an electrode assembly is sealed in an exterior body together with an electrolyte (for example, a nonaqueous electrolyte). The structure of the electrode assembly is not necessarily limited to the planar stack structure (see FIG. 1(A)), and the electrode assembly may have, for example, a wound structure (see FIG. 1(B)) in which an electrode unit (electrode-constituting layer) containing a positive electrode, a negative electrode, and a separator disposed between the positive electrode and the negative electrode is wound in a roll shape. That is, for example, as shown in FIG. 1(A), the electrode assembly 10 may have a configuration in which the electrode-constituting layers 5 are stacked so as to be overlaid on each other. Alternatively, the electrode assembly 10 may have a wound structure in which the electrode-constituting layer 5 extending relatively long in a band shape is wound in a roll shape, for example, as shown in FIG. 1(B). Furthermore, for example, the electrode assembly may have a so-called stack-and-folding type structure in which the positive electrode, the separator, and the negative electrode are stacked on a long film and then folded.

The positive electrode includes at least a positive electrode material layer and a positive electrode current collector. In the positive electrode, a positive electrode material layer is provided on at least one surface of a positive electrode current collector, and the positive electrode material layer contains a positive electrode active material as an electrode active material. For example, in each of the plurality of positive electrodes in the electrode assembly, the positive electrode material layer may be provided on both surfaces of the positive electrode current collector, or the positive electrode material layer may be provided only on one surface of the positive electrode current collector.

The negative electrode includes at least a negative electrode material layer and a negative electrode current collector. In the negative electrode, a negative electrode material layer is provided on at least one surface of a negative electrode current collector, and the negative electrode material layer contains a negative electrode active material as an electrode active material. For example, in each of the plurality of negative electrodes in the electrode assembly, the negative electrode material layer may be provided on both surfaces of the negative electrode current collector, or the negative electrode material layer may be provided only on one surface of the negative electrode current collector.

The electrode active materials contained in the positive electrode and the negative electrode, that is, the positive electrode active material and the negative electrode active material are substances directly involved in the transfer of electrons in the secondary battery, and are main substances of the positive and negative electrodes responsible for charge and discharge, that is, a battery reaction. More specifically, ions are brought in the electrolyte due to the "positive electrode active material contained in the positive electrode material layer" and the "negative electrode active material contained in the negative electrode material layer", such ions move between the positive electrode and the negative electrode to transfer electrons, and whereby charging and discharging are performed. In particular, the positive electrode material layer and the negative electrode material layer may be layers capable of occluding and releasing lithium ions. That is, the secondary battery according to the present invention may be a nonaqueous electrolyte secondary battery in which lithium ions move between a positive electrode and a negative electrode through a nonaqueous electrolyte to charge and discharge the battery. When lithium ions are involved in charging and discharging, the secondary battery according to the present invention corresponds to a so-called "lithium ion battery", and the positive electrode and the negative electrode each have a layer capable of occluding and releasing lithium ions.

When the positive electrode active material of the positive electrode material layer is composed of, for example, a granular material, a binder may be contained in the positive electrode material layer for more sufficient contact between granules and shape retention. Furthermore, a conductive aid may be contained in the positive electrode material layer in order to facilitate electron transfer promoting the battery reaction. Similarly, when the negative electrode active material of the negative electrode material layer is composed of, for example, a granular material, a binder may be contained for more sufficient contact between granules and shape retention, and a conductive aid may be contained in the negative electrode material layer in order to facilitate electron transfer promoting the battery reaction. As described above, because of their configurations which contain a plurality of components, the positive electrode material layer and the negative electrode material layer can also be referred to as a "positive electrode mixture layer" and a "negative electrode mixture layer", respectively.

The positive electrode active material may be a substance that contributes to occlusion and release of lithium ions. From such a viewpoint, the positive electrode active material may be, for example, a lithium-containing composite oxide. More specifically, the positive electrode active material may be a lithium transition metal composite oxide containing lithium and at least one transition metal selected from the group consisting of cobalt, nickel, manganese, and iron. That is, in the positive electrode material layer of the secondary battery according to the present invention, such a lithium transition metal composite oxide is preferably contained as a positive electrode active material. For example, the positive electrode active material may be lithium cobaltate, lithium nickelate, lithium manganate, lithium iron phosphate, or a material obtained by replacing some of these transition metals with other metals. Such a positive electrode active material may be contained alone, but may be contained in combination of two or more species.

The binder that can be contained in the positive electrode material layer is not particularly limited, but examples thereof include at least one selected from the group consisting of polyvinylidene fluoride, vinylidene fluoride-hexafluoropropylene copolymers, vinylidene fluoride-tetrafluoroethylene copolymers, and polytetrafluoroethylene. The conductive aid that can be contained in the positive electrode material layer is not particularly limited, but examples thereof include at least one selected from carbon blacks such as thermal black, furnace black, channel black, Ketjen black, and acetylene black, graphite, carbon nanotube, carbon fibers such as vapor-grown carbon fibers, powder metals such as copper, nickel, aluminum, and silver, and polyphenylene derivatives.

The thickness dimension of the positive electrode material layer is not particularly limited, but may be 1 µm or more and 300 µm or less, and is, for example, 5 µm or more and 200 µm or less. The thickness dimension of the positive electrode material layer is the thickness of the positive electrode material layer inside the secondary battery, and the average value of measured values at 10 points randomly selected may be used.

The negative electrode active material may be a substance that contributes to occlusion and release of lithium ions. From such a viewpoint, the negative electrode active material may be, for example, various carbon materials, oxides, and/or lithium alloys.

Examples of various carbon materials for the negative electrode active material include graphite (natural graphite, artificial graphite), hard carbon, soft carbon, and diamond-like carbon. In particular, graphite has high electron conductivity and excellent adhesion to the negative electrode current collector. Examples of the oxide for the negative electrode active material include at least one selected from the group consisting of silicon oxide, tin oxide, indium oxide, zinc oxide, lithium oxide, and similar oxides. The lithium alloy for the negative electrode active material may be a binary, ternary, or higher alloy of lithium and a metal that may be any metal capable of alloying with lithium, such as Al, Si, Pb, Sn, In, Bi, Ag, Ba, Ca, Hg, Pd, Pt, Te, Zn, or La. The structural form of such an oxide may be amorphous. This is because deterioration due to non-uniformity such as crystal grain boundaries or defects is less likely to occur.

The binder that can be contained in the negative electrode material layer is not particularly limited, but examples thereof include at least one selected from the group consisting of styrene butadiene rubber, polyacrylic acid, polyvinylidene fluoride, polyimide-based resins, and polyamideimide-based resins. The conductive aid that can be contained in the negative electrode material layer is not particularly limited, but examples thereof include at least one selected from carbon blacks such as thermal black, furnace black, channel black, Ketjen black, and acetylene black, graphite, carbon nanotube, carbon fibers such as vapor-grown carbon fibers, powder metals such as copper, nickel, aluminum, and silver, and polyphenylene derivatives. The negative electrode material layer may contain a component derived from a thickener component (for example, carboxymethyl cellulose) used at the time of manufacturing the battery.

The thickness dimension of the negative electrode material layer is not particularly limited, but may be 1 µm or more and 300 µm or less, and is, for example, 5 µm or more and 200 µm or less. The thickness dimension of the negative electrode material layer is the thickness of the negative electrode material layer inside the secondary battery, and the average value of measured values at 10 points randomly selected may be used.

The positive electrode current collector and the negative electrode current collector used for the positive electrode and the negative electrode are members that contribute to collecting and supplying electrons generated in the electrode active material due to the battery reaction. Such an electrode current collector may be a sheet-like metal member. Such an electrode current collector may have a porous or perforated form. For example, the current collector may be a metal foil, a punching metal, a net, an expanded metal, or the like. The positive electrode current collector used for the positive electrode is preferably made of a metal foil containing at least one selected from the group consisting of aluminum, stainless steel, nickel, and the like, and may be, for example, an aluminum foil. On the other hand, the negative electrode current collector used for the negative electrode is preferably made of a metal foil containing at least one selected from the group consisting of copper, stainless steel, nickel, and the like, and may be, for example, a copper foil.

The thickness dimension of each of the positive electrode current collector and the negative electrode current collector is not particularly limited, but may be 1 µm or more and 100 µm or less, and is, for example, 10 µm or more and 70 µm or less. The thickness dimension of each of the positive electrode current collector and the negative electrode current collector is the thickness of the current collector inside the secondary battery, and the average value of measured values at 10 points randomly selected may be used.

The separator used for the positive electrode and the negative electrode is a member provided from the viewpoints of preventing a short circuit due to contact between the positive and negative electrodes, holding the electrolyte, and the like. In other words, it can be said that the separator is a member that allows ions to pass through while preventing electronic contact between the positive electrode and the negative electrode. For example, the separator is a porous or microporous insulating member, and may have a membrane form due to its small thickness. By way of an example only, a microporous membrane made of polyolefin may be used as the separator. In this regard, the microporous membrane used as the separator may contain, for example, only polyethylene (PE) or only polypropylene (PP) as polyolefin. Furthermore, the separator may be a stack including a "microporous membrane made of PE" and a "microporous membrane made of PP". The surface of the separator may be covered with an inorganic particle coating layer and/or an adhesive layer. The surface of the separator may have adhesiveness. In the present invention, the separator should not be particularly limited by its name, and may be a solid electrolyte, a gel electrolyte, and/or insulating inorganic particles having a similar function.

The thickness dimension of the separator is not particularly limited, but may be 1 µm or more and 100 µm or less, and is, for example, 2 µm or more and 20 µm or less. The thickness dimension of the separator is the thickness of the separator inside the secondary battery (particularly, the thickness of the separator between the positive electrode and the negative electrode), and the average value of measured values at 10 points randomly selected may be used.

In the secondary battery of the present invention, an electrode assembly including an electrode-constituting layer containing a positive electrode, a negative electrode, and a separator may be sealed in an exterior body together with an electrolyte. The electrolyte can assist movement of metal ions released from the electrodes (positive electrode and/or negative electrode). The electrolyte may be a "nonaqueous-based" electrolyte such as an organic electrolyte and an organic solvent, or may be an "aqueous-based" electrolyte containing water. When the positive electrode and the negative electrode have a layer capable of occluding and releasing lithium ions, the electrolyte is preferably a "nonaqueous-based" electrolyte containing an organic electrolyte, an organic solvent, and the like. That is, the electrolyte is preferably a nonaqueous electrolyte. In the electrolyte, metal ions released from the electrodes (positive electrode and/or negative electrode) are present, and thus the electrolyte assists movement of the metal ions in the battery reaction. The electrolyte may have a form such as a liquid form or a gel form.

The nonaqueous electrolyte is an electrolyte containing a solvent and a solute. The specific solvent of the nonaqueous electrolyte may contain at least carbonate. Such carbonates may be cyclic carbonates and/or chain carbonates. Although not particularly limited, examples of the cyclic carbonates include at least one selected from the group consisting of propylene carbonate (PC), ethylene carbonate (EC), butylene carbonate (BC), and vinylene carbonate (VC). Examples of the chain carbonates include at least one selected from the group consisting of dimethyl carbonate (DMC), diethyl carbonate (DEC), ethyl methyl carbonate (EMC), and dipropyl carbonate (DPC). By way of an example only, a combination of cyclic carbonates and chain carbonates may be used as the nonaqueous electrolyte, and for example, a mixture of ethylene carbonate and diethyl carbonate may be used. As a specific solute of the nonaqueous electrolyte, for example, a Li salt such as LiPF₆ and/or LiBF₄ may be used.

The exterior body of the secondary battery is a member capable of housing or enclosing an electrode assembly in which electrode-constituting layers containing a positive electrode, a negative electrode, and a separator are stacked. As will be described later, in the present invention, the exterior body may be a metal exterior body having a non-laminate configuration.

### [Characteristics of secondary battery of present invention]

The secondary battery of the present invention is characterized by the configuration of its external output terminal. That is, the secondary battery is characterized by the configuration of its output terminal to be connected to external equipment. Specifically, the exterior body includes a metal plate joined with an insulating material interposed therebetween, and the metal plate serves as the external output terminal.

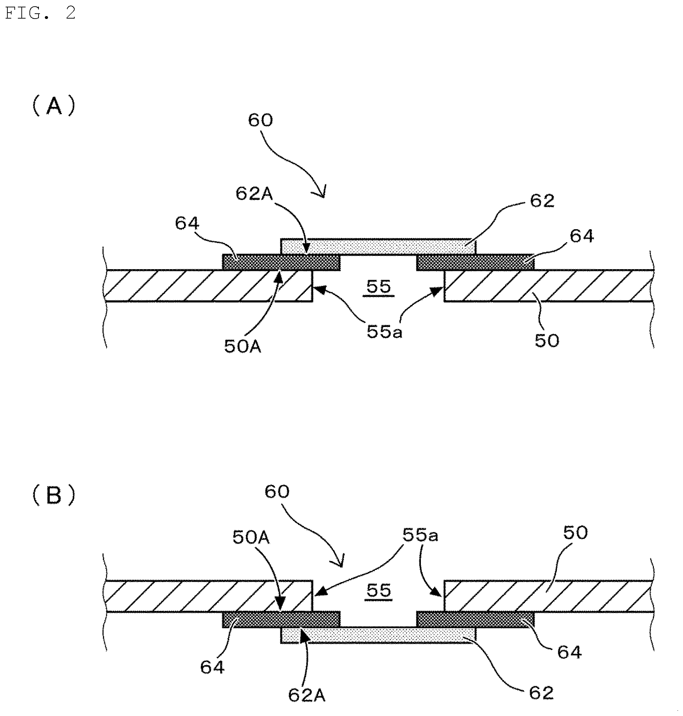

As shown in FIGS. 2(A) and (B), in the secondary battery of the present invention, the external output terminal 60 includes at least a metal plate 62 and an insulating material 64. The exterior body 50 is provided with an opening portion 55, and a metal plate 62 is disposed on the exterior body surface located around the opening portion 55 with an insulating material 64 interposed therebetween.

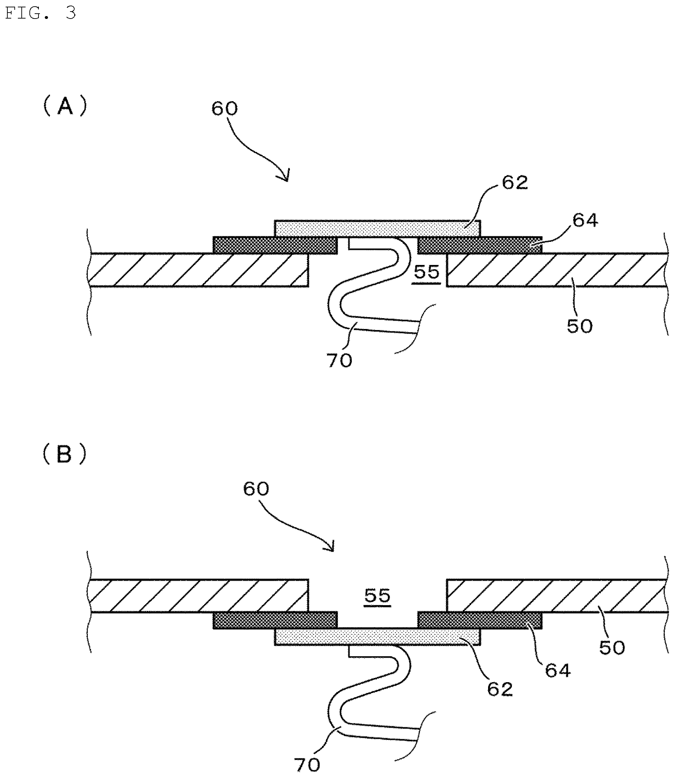

Preferably, due to the bonding property of the insulating material 64, the metal plate 62 is attached to the exterior body 50 with the insulating material 64 interposed therebetween. It can be said that the metal plate 62 is joined to the exterior body 50 with the insulating material 64 interposed therebetween in a peripheral region of the opening portion 55 provided in the exterior body 50. A tab extending from the electrode assembly is connected to the metal plate. More specifically, as shown in FIG. 3, a tab 70 extending from the electrode assembly is attached to the metal plate 62 provided in the opening portion 55. That is, the conductive tab 70 of one of the positive electrode and the negative electrode, extending from the electrode assembly, is connected to the inner surface of the metal plate 62 of the exterior body 50. In particular, as shown in FIG. 3(A), when the metal plate 62 is positioned on the outer side of the exterior body 50, the tab 70 is attached to the metal plate 62 through the opening portion 55 of the exterior body 50.

The tab 70 may be made of an electrode current collector of the electrode assembly. That is, the tab 70 may be composed of a portion of the electrode current collector where the electrode material is not provided. Alternatively, the tab 70 may be a current collecting lead provided in the electrode assembly (in particular, the electrode). Such a current collecting lead has conductivity, for example, is made of metal, and may have a thin form and/or a long form. Such a tab having conductivity is flexible and may be provided in a deflected form and/or a bent form in order to contribute to a vent mechanism described below.

The insulating material 64 may be provided along the peripheral edge of the opening portion 55 on the surface of the exterior body. For more suitable insulation, the insulating material 64 may be provided so as to spread to a region outside the metal plate 62. That is, for example, as shown in FIGS. 2(A) and 2(B), the insulating material 64 may be provided on the exterior body 50 so as to stick out from the metal plate 62. Similarly, in order to provide more suitable insulation, the insulating material 64 may also be provided to the inside so as to cross over the edge of the opening portion 55 of the exterior body 50. That is, for example, as shown in FIGS. 2(A) and 2(B), the insulating material 64 may extend inward so as to cross over the edge portion 55a forming the opening portion 55 in the exterior body 50, and thus a part of the insulating material 64 may extend to the region of the opening portion 55.

The metal plate 62 may have a shape along the exterior body. For example, the metal plate 62 is configured in parallel with the lateral direction in the drawing so as to conform to the shape of the exterior body 50. That is, in the sectional view as illustrated, the metal plate 62 and the surface of the exterior body 50 on which the metal plate is provided may have a positional relationship or a form parallel to each other. In addition, the insulating material may also be formed in a shape along the exterior body. For example, similarly to the metal plate 62, the insulating material 64 is configured in parallel with the lateral direction in the drawing so as to conform to the shape of the exterior body 50. That is, in the sectional view as illustrated, the insulating material 64 and the surface of the exterior body 50 on which the insulating material is provided may have a positional relationship or a form parallel to each other.

As described above, because of the relatively simple structure in which the metal plate is attached to the metal exterior body with the insulating material interposed therebetween, a simple and inexpensive secondary battery is easily obtained as compared with the conventional rivet type output terminal. In addition, the external output terminal in the present invention has a small space required for sealing, and thus contributes to battery downsizing and energy density improvement.

The external output terminal in the present invention does not include a so-called "crimped" configuration (hereinafter, the configuration of the terminal not including crimping as described above is also referred to as a "non-crimped configuration"). That is, when the metal plate is attached to the exterior body with the insulating material interposed therebetween, a force large enough to deform the metal plate is not applied. Thus, the possibility that the insulating material is extremely thinned or cut is reduced while the insulating material provides a desired sealing force. That is, in the external output terminal of the present invention, an inconvenient event as the desired insulation is impaired is suppressed.

The metal plate in the present invention is a non-crimped metal plate. Further, due to such a non-crimped metal plate, for example, the metal plate extends on the same plane in sectional view. In short, the metal plate of the external output terminal does not have a bent form as a whole, but has a flat plate form. As shown in FIGS. 2(A) and 2(B), the sectional view shape of the metal plate 62 forming the external output terminal is, for example, a rectangular sectional shape. Such a metal plate does not receive a history of pressure deformation, and tends to provide long-term stability from the viewpoint of material quality. That is, the external output terminal is likely to be suitable for long-term use of the secondary battery.

The material of the metal plate is not particularly limited, and may be, for example, at least one selected from the group consisting of aluminum, nickel, stainless steel (SUS), and copper. The metal plate may have a plurality of layers made of different metal materials. The plan view shape of the metal plate is not particularly limited, and may be, for example, a circular shape or a rectangular shape including a quadrangle or the like. The surface of the metal plate may be subjected to an appropriate surface treatment. The term "stainless steel" in the present specification refers to, for example, stainless steel defined in "JIS G0203 Glossary of terms used in iron and steel", and the stainless steel may be an alloy steel containing chromium or chromium and nickel.

Further, in one embodiment of the present invention, due to the non-crimped configuration, for example, the insulating material may also extend on the same plane in sectional view. That is, the sectional view shape of the insulating material at the external output terminal is not a bent shape, and may be, for example, a rectangular shape. As shown in FIGS. 2(A) and 2(B), the thickness of the insulating material 64 may be substantially constant. It can be said that such an insulating material is an insulating material in which the action of pressure deformation during installation of the external output terminal is further reduced.

The material of the insulating material 64 is not particularly limited as long as it exhibits "insulation property" and "bonding property". The insulating material 64 may include a resin material. For example, the insulating material 64 may contain a thermoplastic resin. By way of one specific example only, the insulating material may contain polyolefins such as polyethylene and/or polypropylene.

The insulating material 64 may have a film form. That is, the insulating material 64 may have a membrane form, that is, a thin form. For example, the insulating material 64 may be provided using a film-like insulating material precursor having a form close to the final shape.

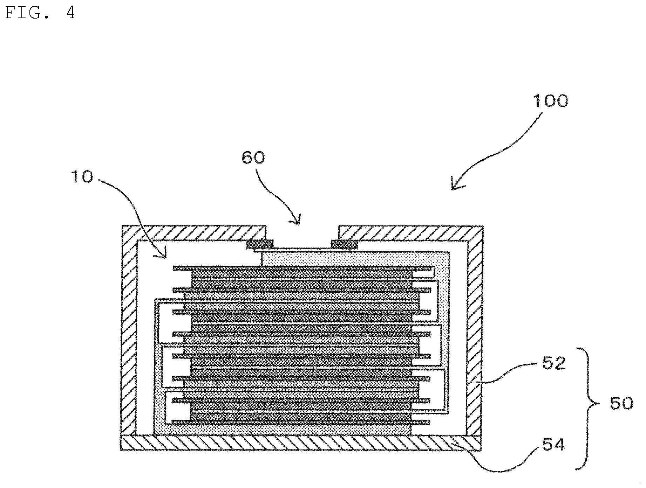

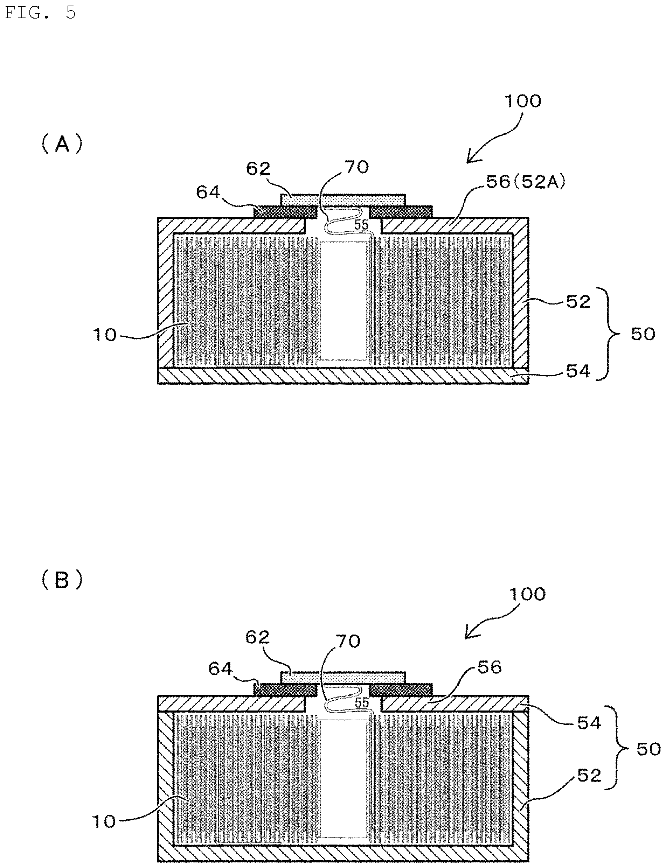

In the secondary battery of the present invention, the exterior body 50 is preferably a metal exterior body. For example, as shown in FIG. 4 and FIGS. 5(A) and 5(B), the metal exterior body as the exterior body 50 may have a two-part configuration of a cup-shaped member 52 and a lid-shaped member 54. The "cup-shaped member" in the present specification means a member, for example, which includes a side surface portion corresponding to a body portion and a main surface portion (in an exemplary mode, for example, a bottom portion) continuous with the side surface portion, and inside which a hollow portion is formed. The "lid-shaped member" in the present specification means a member provided so as to cover such a cup-shaped member. The lid-shaped member may be, for example, a single member (typically a flat plate-like member) extending in the same plane. In the exterior body, the lid-shaped member and the cup-shaped member may be combined such that the outer-edge portion of the lid-shaped member and the upper-end portion of the side surface portion of the cup-shaped member fit with each other.

In the secondary battery of the present invention, the metal exterior body preferably has a non-laminate configuration. That is, preferably, the exterior body does not have a laminate configuration as a whole. Thus, in the present invention, the metal exterior body is not, for example, a laminate member of a metal sheet/a fusion layer/a protective layer. It can be said that the metal exterior body in the present invention is different from an exterior body of a soft case type battery corresponding to a pouch formed of a so-called laminate film.

Preferably, the metal exterior body is formed of a single metal member. For example, the metal exterior body may be a single member composed of metal such as stainless steel (SUS) or aluminum. The term "metal single member" as used herein means that the exterior body does not have a so-called laminate configuration in a broad sense, and means that the exterior body is a member substantially composed only of metal in a narrow sense. Thus, when the metal exterior body is a member substantially composed of only metal, the surface of the metal exterior body may be subjected to an appropriate surface treatment. For example, on a cut surface obtained by cutting such a metal exterior body in a thickness direction thereof, a single metal layer can be confirmed except for a portion subjected to surface treatment or the like.

Due to the non-laminate configuration, the metal exterior body may have a relatively thin thickness. For example, the metal exterior body in the present invention may have a thickness dimension of 50 µm or more and less than 200 pm, for example, 50 µm or more and 190 µm or less, 50 µm or more and 180 µm or less, or 50 µm or more and 170 µm or less. Such a thin exterior body contributes to downsizing and energy density improvement of the secondary battery, and in the present invention, an inconvenient event caused by "thinness" of the exterior body is suppressed. This will be described in detail. In the conventional rivet type external output terminal, due to the compressive force caused by "crimping", there is a possibility that the region 95' of the insulating portion 90' existing in the vicinity of the edge of the exterior body 50' is extremely thinned or cut (see FIG. 19), as described above. In particular, such an inconvenient event is more likely to become apparent as the thickness of the exterior body 50' decreases. This is because, when the exterior body 50' becomes thinner, stress for locally thinning the region 95' of the insulating portion 90' or stress for cutting the region tends to concentrate more. In this respect, in the present invention, due to the non-crimped configuration, if the thickness of the metal exterior body is thin, such an inconvenient event will not be caused. That is, the external output terminal in the present invention enables to reduce the size and improve the energy density of the secondary battery without impairing the desired sealing force.

When the metal exterior body is composed of the cup-shaped member and the lid-shaped member, the cup-shaped member and the lid-shaped member may be hermetically sealed by joining to each other. That is, the cup-shaped member and the lid-shaped member are not crimped, and thus airtight sealing by crimping need not be performed. As a result, it is easy to obtain a secondary battery that achieves space saving as compared with a secondary battery including an exterior body that is joined by crimping. That is, the non-crimped form of the cup-shaped member and the lid-shaped member suitably contributes to downsizing and energy density improvement of the secondary battery.

In a preferred mode, the external output terminal is one of a positive electrode and a negative electrode, and the exterior body is the other of the positive electrode and the negative electrode. As a result, the number of parts of the secondary battery can be reduced, and the space required for output in the cell thickness direction can be reduced by half as compared with the case where the terminal plates are provided on the upper and lower surfaces.

For example, the positive electrode side of the secondary battery can be provided only on the metal plate of the external output terminal, while the negative electrode side of the secondary battery can be provided in any region of the exterior body. That is, the external output terminal of the metal plate may be employed for the positive electrode side only, and external connection of the negative electrode side may be taken from any place of the metal exterior body. When the side that outputs by using the terminal plate (that is, the metal plate) in this manner is a positive electrode, the metal exterior body (that is, the side being the metal "can" as a whole) is a negative electrode. Thus, as a lithium ion battery designed to have the negative electrode area larger than the positive electrode area, if the electrode comes into contact with the interior of the can, the possibility of causing a large short circuit can be reduced.

The present invention can be embodied in various modes. This will be described below.

### (External output terminal located on inner side of exterior body)

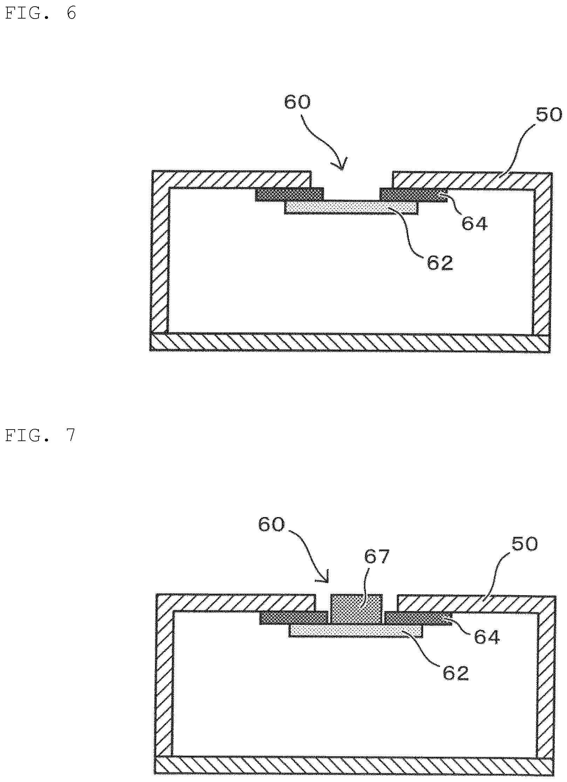

Such a mode is a mode in which the external output terminal is positioned on the inner side of the exterior body. As shown in FIG. 6, in such a mode, the metal plate 62 is positioned on the inner side of the exterior body 50. The insulating material 64 is disposed on the inner side of the exterior body 50, and it can be said that the metal plate 62 is attached to the inner side of the exterior body 50 with the insulating material 64 interposed therebetween. In such a mode, since the metal plate is positioned inside the outer front surface level of the exterior body, the secondary battery may have a form in which a portion of the external output terminal is recessed.

When the external output terminal is positioned on the inner side of the exterior body, the external output terminal does not protrude outside the exterior body as compared with a conventional rivet type output terminal, and accordingly it is easy to improve the energy density of the battery. In addition, the mode in which the external output terminal is positioned on the inner side of the exterior body is suitable when the connecting part of the external equipment side to be connected to the secondary battery has a convex portion, and can contribute to an increase of the degree of freedom in designing the secondary battery.

As shown in FIG. 7, in such a mode, a metal member 67 may be further provided on the outer surface of the metal plate 62. This is because the secondary battery is more likely to be easily connected to external equipment. The metal member 67 may be provided directly on the metal plate 62. A tab extending from the electrode assembly may be connected to the metal member 67. The metal member 67 may be thicker than the metal plate 62. As illustrated, the outer front surface of the metal member 67 may be at substantially the same level as the outer surface of the exterior body 50. By providing the metal member 67 in this manner, it is possible to facilitate connection to external equipment at the external output terminal. The material of the metal member 67 may be the same as or different from that of the metal plate 62.

### (External output terminal located on outer side of exterior body)

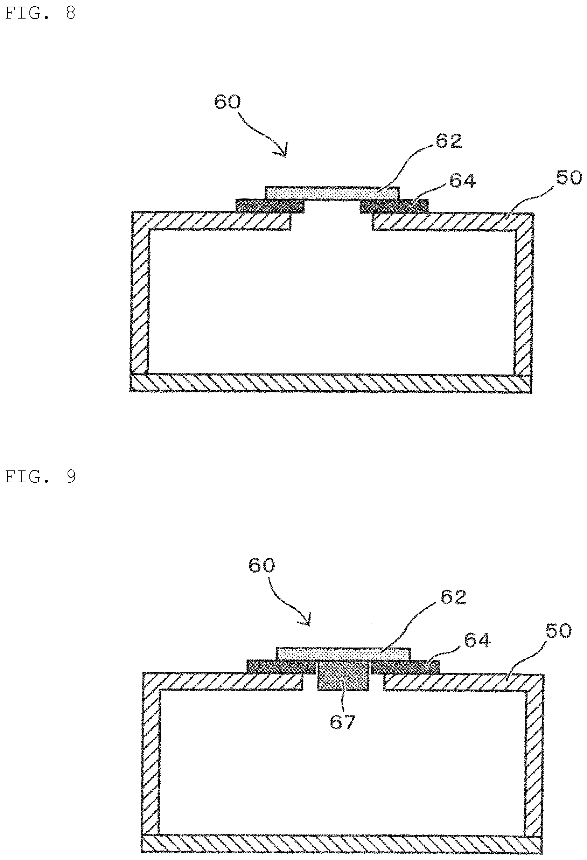

Such a mode is a mode in which the external output terminal is positioned on the outer side of the exterior body. As shown in FIG. 8, in such a mode, the metal plate 62 is positioned on the outer side of the exterior body 50. The insulating material 64 is provided on the outer side of the exterior body 50, and it can be said that the metal plate 62 is attached to the outer side of the exterior body 50 with the insulating material 64 interposed therebetween. In such a mode, since the metal plate is positioned outside the outer front surface level of the exterior body, the secondary battery has a form in which a portion of the external output terminal protrudes convexly.

When the external output terminal is positioned on the outer side of the exterior body, the external output terminal does not protrude inside the exterior body as compared with a conventional rivet type output terminal, and accordingly a larger electrode assembly can be provided. That is, it is easy to improve the battery energy density. In addition, the mode in which the external output terminal is positioned on the outer side of the exterior body is suitable when the connecting part of the external equipment side to be connected to the secondary battery has a concave portion, and can contribute to an increase of the degree of freedom in designing the secondary battery.

As shown in FIG. 9, a metal member 67 may be further provided on the inner surface of the metal plate 62. This is because connection to the internal terminal at the external output terminal is more likely to be easier. The metal member 67 may be provided directly on the metal plate 62. A tab extending from the electrode assembly may be connected to the metal member 67. The metal member 67 may be thicker than the metal plate 62. As illustrated, for example, the inner front surface of the metal member 67 may be at substantially the same level as the inner surface of the exterior body 50. By providing the metal member 67 in this manner, it is possible to facilitate connection to the internal terminal at the external output terminal. The material of the metal member 67 may be the same as or different from that of the metal plate 62.

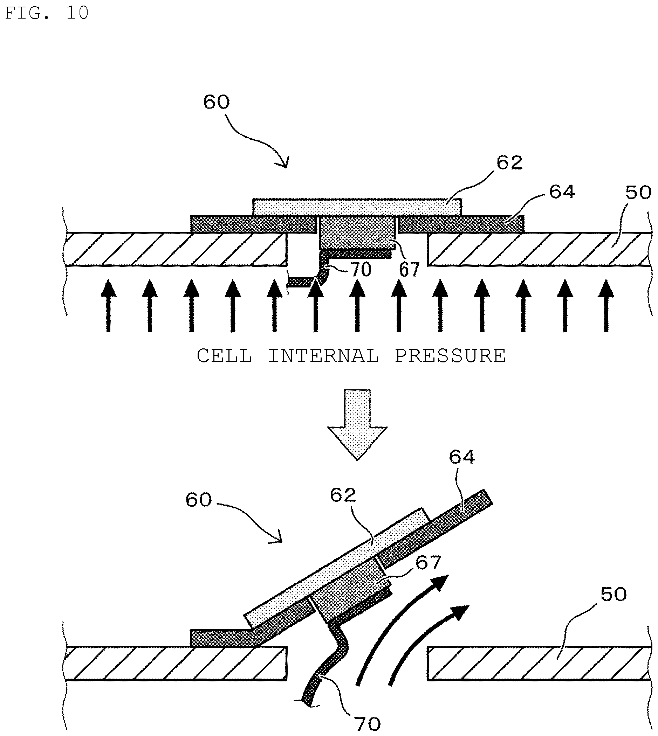

The inventor of the present application has extensively conducted studies on a secondary battery having an external output terminal positioned on the outer side, from the viewpoint that there is room for improving safety during use. As a result, the present inventor has found that an external output terminal is actively used as a vent member, and has obtained a battery including a more suitable vent mechanism (hereinafter, also referred to as a "vent function"). Specifically, in the external output terminal located on the outer side of the exterior body, the joint portion of the insulating material to the exterior body and/or the metal plate may be peelable due to the raised cell internal pressure of the secondary battery. In such a case, the metal plate 62 can open when the cell internal pressure becomes excessively high with use of the battery such as charging and discharging (see FIG. 10), and the external output terminal can be used as a degassing mechanism in case of abnormality. That is, in such a mode, the metal plate is joined to the outer side of the exterior body with the insulating material interposed therebetween, the joint surface of the insulating material is first peeled off when the cell internal pressure rises, and the internal pressure can be reduced. In addition, when the battery temperature rises due to abnormal heat generation of the battery or heating from the outside, the insulating material melts, so that the joint surface is peeled off, and the pressure inside the battery can be safely reduced before the pressure inside the battery becomes excessively high. Such a secondary battery therefore has an advantage in that it is not necessary to separately provide a vent in a battery design.

In order to effectively activate the vent function, it is preferable that the metal plate be not fixed with a member other than the insulating material. In addition, as the tab 70 for connecting the electrode assembly to the metal plate, that is, the conductive tab, a tab that can follow the opening of the metal plate 62 as shown in FIG. 10 is preferable.

The vent mechanism associated with the external output terminal will be described in detail. When the cell internal pressure increases with use of the battery such as charging and discharging, the force that the metal plate 62 receives also increases due to the cell internal pressure. In a preferred mode of the present invention, when the cell internal pressure becomes higher than necessary, the force that the metal plate 62 receives exceeds the bonding force between the metal plate 62 and the exterior body 50 (that is, bonding force of the metal plate 62 to the exterior body 50 with the insulating material 64 interposed therebetween), and at least a part of the metal plate 62 can be detached from the exterior body 50. For example, when the metal plate 62 is provided so as to cover the opening portion 55 of the exterior body 50, the metal plate 62 can be displaced so as to open the cover (see FIG. 10). By such opening of the metal plate 62, excessive gas in the exterior body is released to the outside of the exterior body, and it is possible to prevent, in advance, a more serious accident such as an unintended battery explosion.

In the present specification, the "cell internal pressure" means the pressure inside the exterior body of the secondary battery in a broad sense. In a narrow sense, the "cell internal pressure" means a pressure inside the exterior body that includes the electrode assembly and is being brought into an airtight state (in particular, an internal pressure during use of the battery). The "insulating material" in this mode contributes to the vent mechanism as described above, and can be referred to as an insulating material that can be peeled off when the cell internal pressure is abnormal, that is, a peelable insulating material.

The tab 70 connected to the metal plate 62 may have a "play" such that the metal plate 62 opens more suitably in the vent mechanism. That is, if there is no margin in the length of the tab 70 connected to the metal plate 62, the presence of the tab itself may become resistance against the opening of the metal plate 62, and the metal plate 62 may not open well in case of abnormality. In this respect, in the vent mechanism according to the present invention, the length of the tab 70 between the electrode assembly 10 and the metal plate 62 may be relatively long to the extent that the opening of the metal plate 62 is not undesirably inhibited (in particular, the tab length may be longer than a conventional tab length). That is, the tab 15 may have a length sufficient that excessive tension that inhibits the opening of the metal plate 62 between the metal plate 62 and the electrode assembly 10 does not work.

For example, in the exemplary modes of FIGS. 5(A) and 5(B), the tab 70 extending from the electrode assembly 10 is provided in a deflected state on the metal plate 62. In addition, as illustrated in the exemplary modes of FIGS. 5(A) and 5(B), the tab 70 may have a bent form so as to flex (for example, the tab may have a form that bends at its end). By the tab 70 having such a deflected and/or bent form, it can be suppressed that the opening of the metal plate 62 as the vent mechanism is undesirably inhibited.

In the vent mechanism, the exterior body 50 may be displaced due to the raised cell internal pressure such that the metal plate 62 opens more suitably. That is, when the cell internal pressure becomes abnormally high, the exterior body 50 may be deformed so as to be distorted or deflected, and the metal plate 62 may be easily detached from the exterior body 50. As described above, the exterior body is deformed so as to be distorted or deflected, whereby the vent mechanism in which the metal plate 62 opens becomes easier to function more suitably. For example, the exterior portion of the exterior body that provides the surface on which the metal plate is disposed may be at least partly displaceable due to the raised cell internal pressure. In the exemplary modes shown in FIGS. 5(A) and 5(B), the exterior portion 56 having the surface on which the metal plate 62 is disposed among the constituent surfaces of the exterior body 50 may be deformed so as to be distorted or deflected, whereby the metal plate 62 may be easily detached from the exterior body 50. In FIG. 5(A), when the opening portion 55 is provided in the main surface portion 52A of the cup-shaped member 52 of the exterior body 50 and the metal plate 62 is disposed, the main surface portion 52A may be displaceable due to the raised cell internal pressure. On the other hand, in FIG. 5(B), when the opening portion 55 is provided in the lid-shaped member 54 of the exterior body 50 and the metal plate 62 is disposed, the lid-shaped member 54 may be displaceable due to the raised cell internal pressure. Since the lid-shaped member 54 alone forms the "exterior portion 56 that provides the surface on which the metal plate 62 is disposed", it is easy to provide the lid-shaped member as a displaceable member.

### (Thin mode of exterior body)

Such a mode is a mode in which a part of the exterior body has a thin form. Specifically, the exterior portion that provides the surface on which the metal plate is disposed among the constituent surfaces of the exterior body has a thin form.

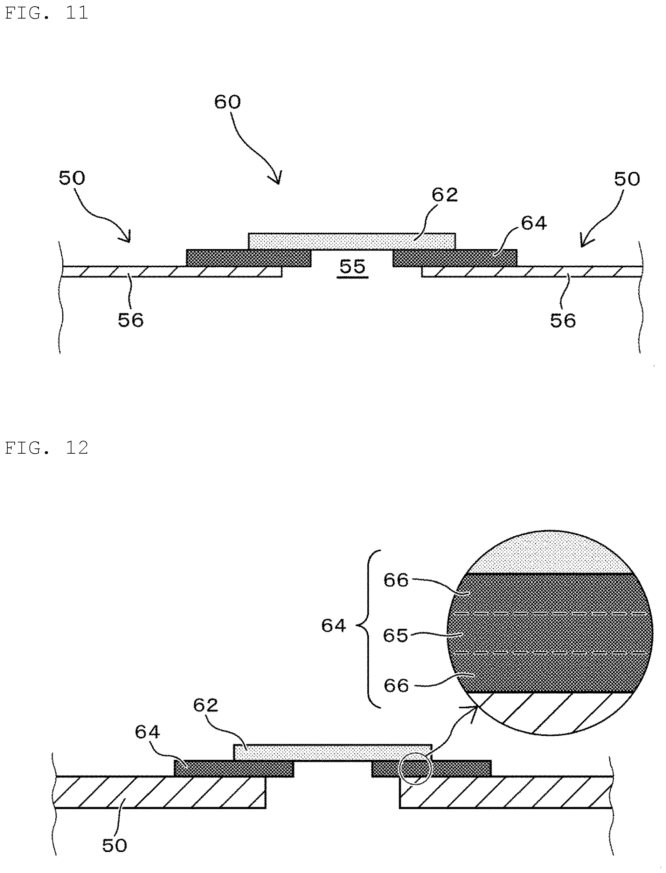

For example, as shown in FIG. 11, the thickness of the exterior portion 56 including the surface on which the metal plate 62 is disposed among the constituent surfaces of the exterior body 50 is smaller than the thickness of the metal plate 62. That is, the thickness of the exterior portion 56 where the external output terminal 60 is provided is smaller than the thickness of the metal plate 62. In such a mode, when an abnormality such as an excessive rise in cell internal pressure occurs, the exterior portion 56 is easily deformed so as to be distorted or deflected, and the metal plate 62 can be displaced so as to be detached from the exterior body 50. That is, the vent mechanism in which the metal plate 62 opens becomes easier to function more suitably.

The exterior portion having the surface on which the metal plate is disposed may have lower rigidity than the metal plate. Conversely, the metal plate may have relatively higher rigidity than the exterior portion having the surface on which the metal plate is disposed. Such a difference in rigidity contributes to realization of a more suitable vent mechanism. In case of abnormality such as an excessive rise in cell internal pressure, the metal plate is less likely to be deformed due to its high rigidity, but the exterior portion constituting the surface on which the metal plate is disposed can be deformed. As a result, the joint surface of the insulating material is easily peeled off, and the metal plate 62 easily opens.

By way of one example only, the thickness of the exterior portion 56 forming the surface on which the metal plate is disposed may be 170 µm or less. When the thickness of the exterior portion is 170 µm or less, the exterior body is easily deformed in case of abnormality such as an excessive rise in cell internal pressure, and the metal plate 62 easily opens as a vent mechanism. In other words, when the thickness of the exterior portion is larger than 170 µm (for example, when the thickness is 200 µm or more), the exterior body cannot be deformed in case of abnormality, and the metal plate 62 is less likely to open as intended. The lower limit of the thickness of such a thin exterior portion is not particularly limited, but may be, for example, 50 µm.

As shown in FIG. 5(A), when the opening portion 55 is provided in the main surface portion 52A of the cup-shaped member 52 of the exterior body 50 and the metal plate 62 is disposed, the thickness of the main surface portion 52A may be smaller than the thickness of the metal plate 62. On the other hand, as shown in FIG. 5(B), when the opening portion 55 is provided in the lid-shaped member 54 of the exterior body 50 and the metal plate 62 is disposed, the thickness of the lid-shaped member 54 may be smaller than the thickness of the metal plate 62. Since the lid-shaped member 54 alone forms the "exterior portion 56 that provides the surface on which the metal plate 62 is disposed", it is easy to provide the lid-shaped member as a member having a small thickness, and thus, the lid-shaped member tends to be a member that is easily deformed so as to be distorted or deflected.

### (Mode of unique insulating material configuration)

In such a mode, the insulating material has a unique configuration. Specifically, the insulating material includes at least two materials having melting points different from each other.

The insulating material may be, for example, a thermoplastic resin, and may have a stacked structure in which a low melting point resin layer having a relatively low melting point and a high melting point resin layer having a relatively high melting point are stacked on each other. When the resin layers having melting points different from each other are provided in the insulating material as described above, not only the manufacturing process of the battery becomes more preferable, but also the insulating material becomes more suitable during use of the battery. In the manufacturing process, the metal plate can be joined to the exterior body at a lower temperature with the low melting point resin layer while handling of the insulating material is secured by using the high melting point resin layer. On the other hand, when an abnormality such as an excessive rise in cell temperature occurs during use of the battery, a resin layer having a relatively low melting point can be melted due to the rise in cell temperature. Thus, in case of cell abnormality, the joint surface of the insulating material is easily peeled off, and the metal plate 62 becomes easier to open more suitably.

For example, the insulating material may have a configuration in which two low melting point resin layers are stacked with a high melting point resin layer interposed therebetween. That is, as shown in FIG. 12, the insulating material 64 may have a configuration (that is, for example, the illustrated three-layer configuration) including a high melting point resin layer 65 having a relatively high melting point and low melting point resin layers 66 having a relatively low melting point with the high melting point resin layer interposed therebetween. In such a case, the joint surface between the metal plate 62 and the insulating material 64 and the joint surface between the exterior body 50 and the insulating material 64 each form an interface in which the low melting point resin layer is directly involved. Thus, in case of abnormality such as an excessive rise in cell temperature, melting of the low melting point resin layer is likely to be brought about directly to the interface, peeling of the joint surface is likely to occur, and the metal plate 62 becomes easier to open more suitably.

The low melting point resin layer has a relatively lower melting point than the high melting point resin layer. On the other hand, the high melting point resin layer has a relatively higher melting point than the low melting point resin layer. For example, on the presumption that the cell temperature in case of abnormality is T°C, the low melting point resin layer may have a melting point lower than the cell temperature in case of abnormality T°C, and the high melting point resin layer may have a melting point higher than the cell temperature in case of abnormality T°C. By way of one example only, the cell temperature in case of abnormality T°C is, for example, about 150°C to about 200°C.

The low melting point resin layer and the high melting point resin layer may be composed of molecules different from each other (for example, different monomer units). Alternatively, the low melting point resin layer and the high melting point resin layer may be based on the same molecule (for example, the same or similar monomer unit). For example, both the low melting point resin layer and the high melting point resin layer may contain the same olefin as a monomer constituent element. In this case, in order to make a difference in physical properties, particularly a difference in melting points, between the low melting point resin layer and the high melting point resin layer, the material of the low melting point resin layer and the material of the high melting point resin layer may have different degrees of polymerization and different proportions of non-crystalline portions. The same olefin may be, for example, ethylene or propylene. Without being bound by a specific theory, when the degree of polymerization becomes relatively high and/or the proportion of the non-crystalline portion becomes relatively low (for example, when the degree of crystallinity becomes relatively high), the material of the resin layer tends to have a relatively high melting point. Such adjustment of the degree of polymerization and the degree of crystallinity may be performed by a conventional method, and these can be adjusted, for example, by changing the reaction temperature, the pressure, and/or the catalyst in the polymerization reaction. The material is not limited to a homopolymer, and the materials of both the low melting point resin layer and the high melting point resin layer may be a copolymer or a terpolymer containing the same olefin as a monomer unit. In such a case, the same olefin may be contained as a main monomer in an amount of, for example, 50 mol% or more (based on 100 mol% of all monomers), and as the content of the comonomer (the comonomer may or may not be an olefin, and the comonomer itself may be the same or similar between the low-melting-point resin layer and the high-melting-point resin layer) increases, the material of the resin layer tends to have a relatively low melting point. As the resin materials of the low melting point resin layer and the high melting point resin layer, commercially available resin materials having melting points different from each other can also be used in any of such a homopolymer, copolymer, and terpolymer.

Such an insulating material composed of resin layers having different melting points may have a film form. For example, the insulating material may include a multilayer film in which two low melting point resin layers are stacked with a high melting point resin layer interposed therebetween.

### (Surface treated mode)

Such a mode is a mode in which a surface to be joined to an insulating material is subjected to surface treatment. Specifically, a joint surface of the exterior body and/or a joint surface of the metal plate to be joined to the insulating material is a surface-treated surface.

For example, as shown in FIG. 2, among surfaces of the exterior body 50, at least the surface 50A (hereinafter, also referred to as "exterior body joint surface") to be joined to the insulating material 64 may be a surface-treated surface. Similarly, among the surfaces of the metal plate 62, at least the surface 62A (hereinafter, also referred to as "metal plate joint surface") to be joined to the insulating material 64 may be a surface-treated surface. When the exterior body joint surface and/or the metal plate joint surface is the surface-treated surface, the joint state of the metal plate to the exterior body can be more suitable. Thus, the vent mechanism in the present invention becomes easier to function as intended. That is, it is easy to obtain a secondary battery in which the metal plate 62 opens in case of abnormality originally assumed while an inconvenient event such as opening of the metal plate 62 at the time when there is no abnormality, that is, when the cell internal pressure or the cell temperature is not excessively high is suppressed.

The surface treatment may be a treatment for improving the bonding property, and may be, for example, a treatment for increasing the bonding strength between the exterior body and the insulating material and/or between the metal plate and the insulating material. More specifically, cleaning, polishing and/or chemical treatment with a chemical agent, physical treatment with plasma and/or ultraviolet rays, primer treatment for imparting a metal compound layer or the like, and plating treatment may be performed on the joint surface. That is, the exterior body joint surface and/or the metal plate joint surface may be at least one kind of surface selected from the group consisting of surfaces subjected to cleaning treatment, polishing treatment, chemical treatment, plasma treatment, ultraviolet treatment, primer treatment, plating treatment, and the like. This enables the vent mechanism to easily function as intended.

In a preferred mode, the exterior body joint surface and/or the metal plate joint surface is a primer-treated surface. In such a case, the insulating material and the exterior body may be joined to each other with the primer-treated surface interposed therebetween, or the insulating material and the metal plate may be joined to each other with the primer-treated surface interposed therebetween. By way of one specific example only, the primer treatment method may include a treatment of forming a metal oxide coating film such as a chromate treatment.

### (Unique thickness mode of insulating material)

Such a mode is a mode in which the thickness of the insulating material has a unique thickness form. Specifically, the insulating material has a non-uniform thickness.

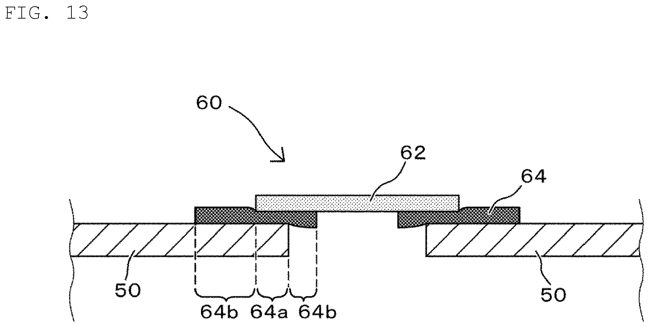

As shown in FIG. 13, in the insulating material 64, for example, a portion sandwiched between the metal plate 62 and the exterior body 50 may be in a relatively thin form. That is, the insulating material 64 need not have a constant thickness as a whole, and may have a form that has a thin portion 64a of a relatively small thickness and a thick portion 64b of a relatively large thickness. In particular, the insulating material 64 may have a form in which the metal plate 62 sinks toward the exterior body 50 in the thin portion 64a, and the thick portion 64b exists on both sides or one side of the thin portion 64a. In such a mode, it is easy to provide a more suitable external output terminal in terms of airtight sealing. In view of such an insulating material, it can be said that the insulating material in the present invention may be slightly embossed or bent although crimping is not performed.

### (Circular secondary battery in plan view)

In such a mode, the plan view shape of the secondary battery is circular. That is, the secondary battery is a button-type or a coin-type in terms of the outer shape.

The fact that the plan view shape of the secondary battery is circular means that the shape of the electrode assembly or the exterior body including the electrode assembly is substantially circular when the electrode assembly is viewed from above or below in the stacking direction of the positive electrode and the negative electrode.

The term "circular shape (substantially circular shape)" as used herein is not limited to a perfect circular shape (that is, simply "circle" or "true circle"), and includes a shape that can be usually included in "round shapes" as recognized by those skilled in the art while being changed from the perfect circular shape. For example, the circular shape may be not only a circle and a perfect circle but also have the circular arc of a locally different curvature, and furthermore, the circular shape may have a shape derived from the circle and the perfect circle, such as an ellipse. In a typical example, such a battery having a circular shape in plan view corresponds to a so-called button-type or coin-type battery.

In the present invention, in the secondary battery having a substantially circular shape in plan view, the exterior body does not have a "crimped" form. That is, the crimped configuration is not included in the terminal region of the external connection terminal and/or the joining region between the cup-shaped member and the lid-shaped member of the exterior body. The crimped configuration increases the volume by its volume, but since there is no crimped configuration in the mode of the present invention, the secondary battery tends to be suitable in terms of downsizing and improvement in energy density.

### (Variation of terminal position)

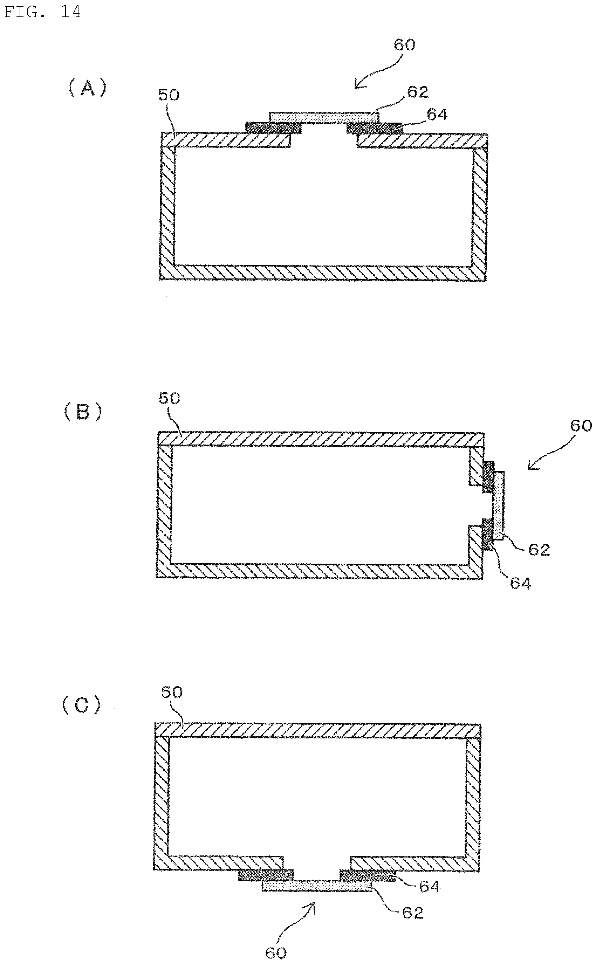

Such a mode is a mode having variations in the arrangement of the external output terminals. As shown in FIGS. 14(A) to (C), in the present invention, the arrangement of the external output terminals 60 in the exterior body 50 can take various forms. Specifically, in FIG. 14(A), the external output terminal 60 is disposed on the upper surface or the top surface of the exterior body 50, in FIG. 14(B), the external output terminal 60 is disposed on the side surface of the exterior body 50, and in FIG. 14(C), the external output terminal 60 is disposed on the lower surface or the bottom surface of the exterior body 50. When the shape of the exterior body 50 in FIG. 14(B) is a cylinder, the metal plate 62 is joined with a curvature so as to conform to the rounded shape of the side surface of the exterior body 50. Such variations in the arrangement of the external output terminals can contribute to an increase in the degree of freedom in designing the secondary battery.

Finally, a method of forming the external output terminal will be described. In the embodiment according to the present invention, a method of forming the external output terminal is not particularly limited, and any method may be used. For example, in the case where a material containing a thermoplastic resin is used as the insulating material, the external output terminal can be formed by disposing a metal plate around a hole provided in the exterior body with the insulating material interposed therebetween and then performing a heat treatment. In the heat treatment, the insulating material is once melted, whereby the metal plate can be attached to the exterior body with the insulating material interposed therebetween. Note that the external output terminal can also be formed by applying an insulating material melted in advance to the exterior body and disposing a metal plate on the applied insulating material.

In the external output terminal, the metal plate and the tab are connected to each other, and they may be connected by, for example, laser welding or the like. When the metal block 67 is used (see FIG. 10) and the tab 70 is connected by welding to the metal plate 62 with the metal block 67 interposed therebetween, the laser welding process can be more easily performed. In addition, since the tab 70 is laser-welded with the metal block 67 interposed therebetween, penetration can be made deeper than in the case where the tab is laser welded directly to the metal plate 62, and a stronger connection can be easily obtained. Furthermore, it can also be expected that the metal block functions as a heat sink during laser welding, and the influence of heat associated with laser welding is less likely to reach the insulating material.

Although the embodiments of the present invention have been described above, only typical examples have been illustrated. Accordingly, those skilled in the art will readily appreciate that the present invention is not limited thereto and that various modes are contemplated.

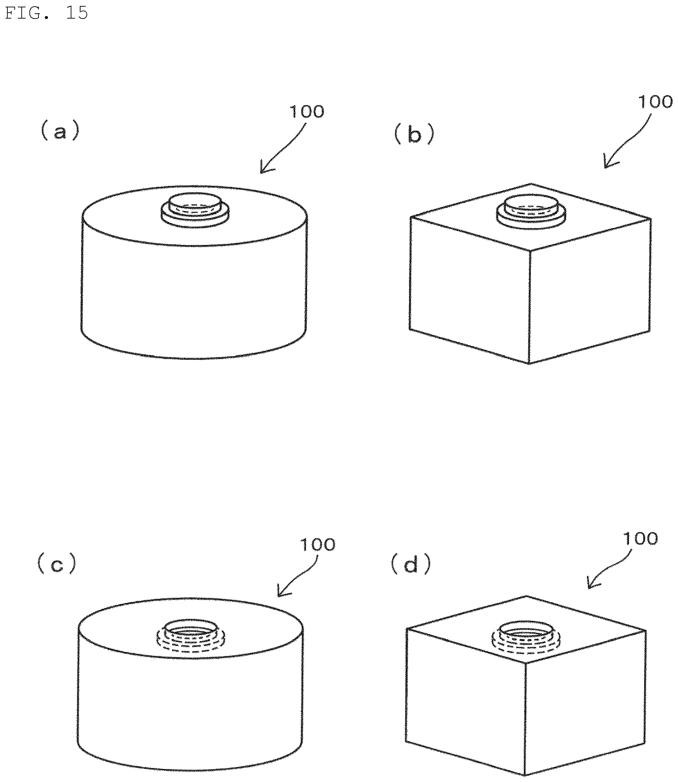

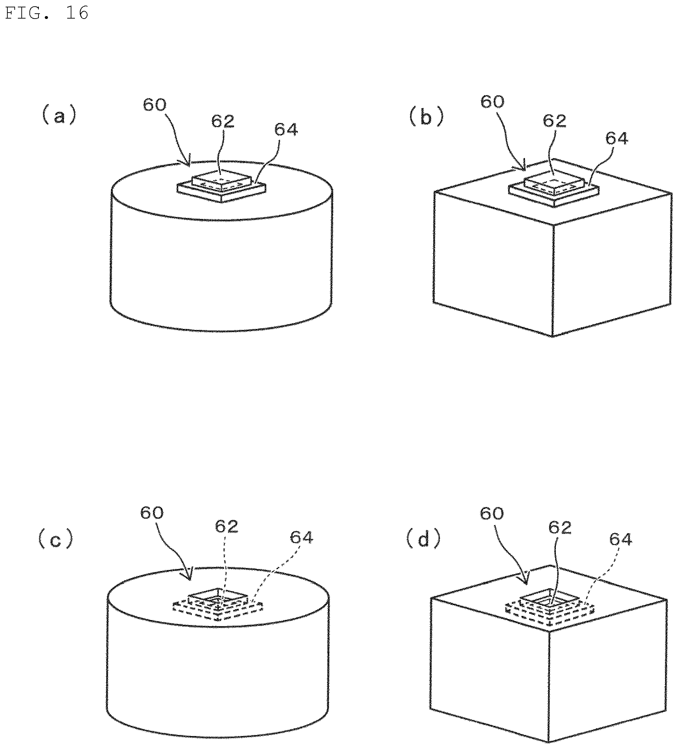

For example, in the above description, the button-type or coin-type secondary battery is mainly mentioned, but the present invention is not necessarily limited thereto. For example, a rectangular secondary battery is also acceptable. That is, as shown in FIGS. 15(a) to (d), the plan view shape of the secondary battery 100 is not limited to a circular shape, and the secondary battery 100 may have a shape such as a quadrangle or a rectangle. Similarly, the shape of the external output terminal 60, that is, the shape (in particular, plan view shape) of the metal plate 62 is not necessarily circular, and the metal plate 62 may have a shape such as a quadrangle or a rectangle (see FIGS. 16(a) to (d)).

In the above description, the modes (FIGS. 2(A) and 2(B)) in which the insulating material 64 is provided on the exterior body 50 so as to stick out from the metal plate 62 have been mentioned, but the present invention is not necessarily limited thereto. The insulating material 64 may be provided so as to be hidden under the metal plate 62 without sticking out from the metal plate 62. For example, the insulating material 64 may be provided so as to substantially align to the outer edge of the metal plate 62, or to be only inside it.

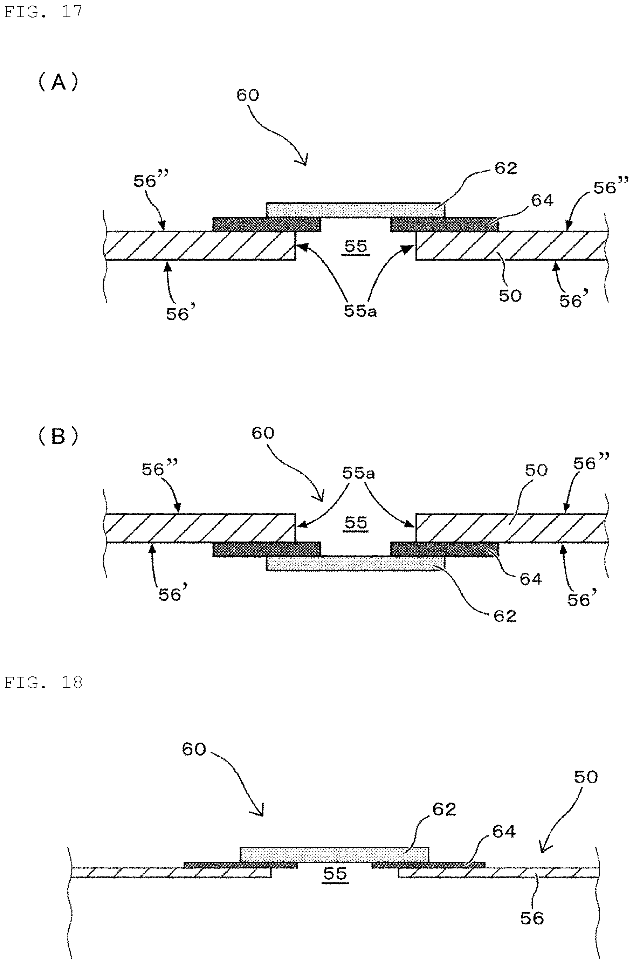

Furthermore, in the above description, the configuration in which the exterior body is formed of the metal single member has been mainly described, but an additional layer may be partly provided on the metal single member. For example, a resin layer for insulation may be provided at a portion of the exterior body other than the joint surface with the insulating material. This is because an inconvenient event such as short circuit can be more easily suppressed. For example, in the form exemplified in FIG. 17, a resin layer (not illustrated) may be provided on an inner surface 56' of the exterior body portion 56 in which the opening portion 55 of the exterior body 50 is provided, an outer surface 56" (in particular, a surface region close to the outer peripheral side where the insulating material 64 is not provided) of the exterior body portion 56, and/or an end surface 55a forming the exterior body opening portion. Noted that these resin layers are provided partly or locally on the exterior body, and are different from those forming a laminate film as the exterior body.

Furthermore, in the drawings (for example, FIGS. 2(A) and 2(B)) taken into consideration in the description of the present invention, the thickness of the insulating material 64 is relatively large and is shown as about the same as the thickness of the metal plate 62, but the present invention is not necessarily limited thereto. As shown in FIG. 18, the thickness of the insulating material 64 may be smaller than the thickness of the metal plate 62. In addition, the thickness of such an insulating material 64 may be about the same as or smaller than the thickness of the "exterior portion 56 that provides the surface on which the metal plate 62 is disposed".

Furthermore, in the above "mode of unique insulating material configuration", resin layers having melting points different from each other have been described, but the "melting point" referred to in such a mode means a melting point mainly in the case of a crystalline resin (including a crystalline resin having a degree of crystallization of not 100%). A case of a non-crystalline resin or a case in which a resin having an increased proportion of non-crystallinity or the like does not have a melting point or does not exhibit a clear melting point can be considered, but in such a case, the present mode may be understood by replacing the "melting point" with the "glass transition point".

Further, although a vent mechanism is shown in FIG. 10, the invention is not necessarily limited to the form shown. In FIG. 10, for example, the tab 70 is attached to the metal plate 62 with the metal member 67 interposed therebetween, but the form in which the tab 70 is directly attached to the metal plate 62 without using the metal member 67 may be acceptable.

### INDUSTRIAL APPLICABILITY

The secondary battery according to the present invention can be utilized in various fields where power storage is assumed to be performed. By way of an example only, the secondary battery of the present invention can be used in the fields of electricity, information, and communication in which electrical and electronic equipment, and the like are used (for example, electrical and electronic equipment fields or mobile equipment fields including mobile phones, smartphones, laptop computers, digital cameras, activity trackers, wrist computers, electronic paper, wearable devices, and small electronic machines such as RFID tags, card type electronic money, and smartwatches, and the like), home and small industrial applications (for example, fields of electric tools, golf carts, and home, nursing, and industrial robots), large industrial applications (for example, fields of forklifts, elevators, and harbor cranes), transportation system fields (for example, fields such as hybrid vehicles, electric vehicles, buses, trains, power-assisted bicycles, and electric two-wheeled vehicles), power system applications (for example, fields such as various types of power generation, load conditioners, smart grids, and household power storage systems), medical applications (medical equipment fields such as earphone hearing aids), pharmaceutical applications (fields such as dosage management systems), IoT fields, space and deep sea applications (for example, fields such as space probes and submersibles), and the like.

### DESCRIPTION OF REFERENCE SYMBOLS

1: Positive electrode
2: Negative electrode
3: Separator
5: Electrode-constituting layer
10: Electrode assembly
50: Exterior body
50A: Surface of exterior body joined to insulating material
55: Opening portion
55a: Edge portion forming opening portion
52: Cup-shaped member
54: lid-shaped member
56: Exterior portion having surface that includes metal plate
56': Inner surface of exterior body portion provided with opening portion
56": Outer surface of exterior body portion provided with opening portion
60: External output terminal
62: Metal plate
62A: Surface of metal plate joined to insulating material
64: Insulating material
64a: Thin portion of insulating material
64b: Thick portion of insulating material
67: Metal member
70: Tab
100: Secondary battery

## Claims

1. A secondary battery comprising:
an electrode assembly; and
an exterior body that houses the electrode assembly,
wherein the exterior body includes a metal plate joined with an insulating material interposed between the exterior body and the metal plate, and the metal plate is an external output terminal.

2. The secondary battery according to claim 1, wherein the exterior body is a metal exterior body, and the metal exterior body has a two-part configuration of a cup-shaped member and a lid-shaped member.

3. The secondary battery according to claim 1 or 2, wherein the external output terminal is one of a positive electrode and a negative electrode, and the exterior body is an other of the positive electrode and the negative electrode.

4. The secondary battery according to any one of claims 1 to 3, wherein the metal plate is positioned on an inner side of the exterior body with the insulating material interposed between the metal plate and the exterior body.

5. The secondary battery according to claim 4, wherein a metal member is further provided on an outer surface of the metal plate.

6. The secondary battery according to any one of claims 1 to 3, wherein the metal plate is positioned on an outer side of the exterior body with the insulating material interposed between the metal plate and the exterior body.

7. The secondary battery according to claim 6, wherein a metal member is further provided on an inner surface of the metal plate.

8. The secondary battery according to claim 6 or 7, wherein a joint portion of the insulating material to the exterior body and/or the metal plate is peelable due to a raised cell internal pressure of the secondary battery.

9. The secondary battery according to claim 8, wherein an exterior portion of the exterior body that provides a surface on which the metal plate is disposed is at least partly displaceable due to the raised cell internal pressure.

10. The secondary battery according to any one of claims 1 to 9, wherein a thickness of the exterior portion of the exterior body that provides the surface on which the metal plate is disposed is smaller than a thickness of the metal plate.

11. The secondary battery according to any one of claims 1 to 10, wherein a joint surface of the exterior body and/or a joint surface of the metal plate to be joined to the insulating material is a surface-treated surface.

12. The secondary battery according to any one of claims 1 to 11, wherein the insulating material includes at least two materials having melting points different from each other.

13. The secondary battery according to claim 12, wherein the insulating material has a configuration including a high melting point resin layer having a relatively high melting point and low melting point resin layers having a relatively low melting point with the high melting point resin layer interposed between the low melting point resin layers.

14. The secondary battery according to any one of claims 1 to 13, wherein the metal plate has a shape along the exterior body.

15. The secondary battery according to any one of claims 1 to 14, wherein the insulating material is formed in a shape along the exterior body.

16. The secondary battery according to any one of claims 1 to 15, wherein the exterior body is provided with an opening portion, and the metal plate is disposed on a surface of the exterior body located around the opening portion with the insulating material interposed between the metal plate and the surface of the exterior body.

17. The secondary battery according to any one of claims 1 to 16, wherein a positive electrode and a negative electrode capable of occluding and releasing lithium ions are included as electrodes of the electrode assembly.
